# EUROPEAN PATENT SPECIFICATION

(11) **EP 2 375 794 B1**
(45) Date of publication and mention of the grant of the patent: **03.10.2012**
(21) Application number: 09838131.2
(22) Date of filing: 02.11.2009
(51) Int. Cl.: H04W 4/16, H04W 8/02, H04W 28/08, H04W 24/02, H04W 60/00, H04L 29/08, H04L 29/06

(54) **SERVICE MIGRATION METHOD, DEVICE AND SYSTEM THEREOF**
DIENSTMIGRATIONSVERFAHREN, VORRICHTUNG UND SYSTEM DAFÜR
PROCÉDÉ DE MIGRATION DE SERVICE, DISPOSITIF ET SYSTÈME ASSOCIÉS

(30) Priority: 30.12.2008 CN 200810242162
(43) Date of publication of application: 12.10.2011
(73) Proprietor: Huawei Technologies Co., Ltd., Longgang District, Shenzhen Guangdong 518129 (CN)
(72) Inventor: YE, Sihai, Shenzhen Guangdong 518129 (CN); NI, Lingfei, Shenzhen Guangdong 518129 (CN)
(74) Representative: Thun, Clemens
(86) International application number: PCT/CN2009/074753
(87) International publication number: WO 2010/081344

(56) References cited:
- EP-A1- 1 973 295
- WO-A1-03/075596
- WO-A1-2008/034817
- WO-A1-2008/049774
- CN-A- 1 881 975
- CN-A- 101 478 737
- CHINA MOBILE ET AL: "Proposed text to the load balance for TR 23.8bc (Feasibility Study on IMS Evolution)", 3GPP DRAFT; S2-087209 LOAD_BALANCE_IMS_EVOL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. China; 20081017, 17 October 2008 (2008-10-17), XP050331721, [retrieved on 2008-10-17]
- '3GPP TSG CT WG4 MEETING 36,24 Aug. 2007', 24 August 2007 article HUAWEI: 'C4-071026: Discussion on the failure of the S-CSCF', pages 1 - 11

## Description

### FIELD OF THE INVENTION

The present invention relates to the communication field, and in particular, to a method, an apparatus, and a system for service migration.

### BACKGROUND OF THE INVENTION

In an IP Multimedia Subsystem (IMS), resource pools are used to improve the security of a Serving-Call Session Control Function (S-CSCF). More than one S-CSCF exists in a resource pool and shares resources. When one S-CSCF is faulty, another S-CSCF in the pool takes over the service of the faulty S-CSCF, thus improving the network reliability and facilitating the Operation and Maintenance (O&M). For example, when S-CSCF 1 needs to be upgraded, a user's service in S-CSCF1 may be migrated to other S-CSCF entities in the pool, and S-CSCF1 is upgraded and verified without carrying services. After completion of the upgrade, the user's service is migrated back to S-CSCF1. In this way, the upgrade is not necessarily performed in the early morning, and may be performed at daytime, which relieves the work intensity of the O&M staff.

In the prior art, after receiving a service migration command, an Interrogating-Call Session Control Function (I-CSCF) migrates the user's service from S-CSCF1 to S-CSCF2 in the pool. After the user finishes registration with S-CSCF2, S-CSCF1 deletes the user data. In this way, the ongoing service is interrupted inevitably, which affects the user experience.

EP 1973295 A1 discloses a call session control server assignment method for assigning a particular call session control server (S-CSCF server) that registers a user equipment and administrates call session control on the user equipment for a plurality of S-CSCF servers in an IP network for achieving IMS architecture.

### SUMMARY OF THE INVENTION

The embodiments of the present invention provide a method, an apparatus, and a system for service migration, so that a user's service can be migrated flexibly, thus improving the user experience.

A method for service migration provided in an embodiment of the present invention includes:
receiving, by a first S-CSCF, a service migration command; and
receiving, by the first S-CSCF, a user's register message sent by an I-CSCF, and deciding, according to a preset configuration policy, whether to migrate the user's service.

An S-CSCF provided in an embodiment of the present invention includes:
a first receiving unit, configured to receive a service migration command;
a second receiving unit, configured to receive a user's register message sent by an I-CSCF; and
a deciding unit, configured to, after the second receiving unit receives the user's register message, decide, according to a preset configuration policy, whether to migrate the user's service.

A system for service migration provided in an embodiment of the present invention includes:
an I-CSCF, configured to send a user's register message to an S-CSCF; and
the S-CSCF, configured to: receive a service migration command; and, after receiving the register message sent by the I-CSCF, decide, according to a preset configuration policy, whether to migrate the user's service.

In the technical solution provided in an embodiment of the present invention, a first S-CSCF receives a service migration command, receives a user's register message sent by an I-CSCF, and decides, according to a preset configuration policy, whether to migrate the user's service. In this way, a user's service can be migrated flexibly, thus improving the user experience.

### BRIEF DESCRIPTION OF THE DRAWINGS

FIG. 1 is a schematic diagram showing a networking mode based on resource pools in an embodiment of the present invention;
FIG. 2 is a flowchart showing a method for service migration according to an embodiment of the present invention;
FIG. 3 is a flowchart showing a method for service migration according to an embodiment of the present invention;
FIG. 4 is a flowchart showing a method for service migration according to an embodiment of the present invention;
FIG. 5 is a flowchart showing a method for service migration according to an embodiment of the present invention;
FIG. 6 is a schematic diagram showing a structure of an S-CSCF according to an embodiment of the present invention; and
FIG. 7 is a schematic diagram showing a structure of a system for service migration according to an embodiment of the present invention.

### DETAILED DESCRIPTION OF THE EMBODIMENTS

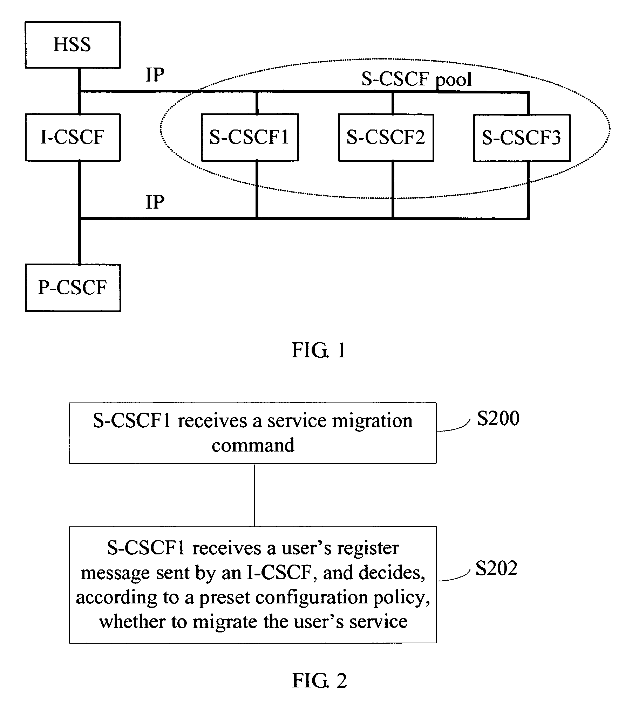

FIG 1 is a schematic diagram showing a networking mode based on an S-CSCF pool. Two or more S-CSCF entities make up an S-CSCF pool. It is assumed that an S-CSCF pool includes three S-CSCF entities. As shown in FIG. 1, the IMS includes a Proxy-Call Session Control Function (P-CSCF), an I-CSCF, a Home Subscriber Server (HSS), and an S-CSCF pool. The S-CSCF pool includes S-CSCF1, S-CSCF2, and S-CSCF3, and the three S-CSCF entities share resources. When one S-CSCF is faulty, another S-CSCF in the pool takes over the service of the faulty S-CSCF, thus improving the network reliability. The S-CSCF is responsible for registration, session control and processing; the P-CSCF is the first access point through which a User Equipment (UE) accesses the IMS; and the I-CSCF is an access point from the visited domain to the home domain, and is responsible for querying home subscriber information.

In the following description, it is assumed that the first S-CSCF is S-CSCF1, and the second S-CSCF is S-CSCF2 or the target S-CSCF.

FIG. 2 is a flowchart showing a method for service migration according to an embodiment of the present invention. S-CSCF1 and S-CSCF2 are in the same S-CSCF pool.

S200. S-CSCF1 receives a service migration command.

S202. S-CSCF1 receives a user's register message sent by an I-CSCF, and decides, according to a preset configuration policy, whether to migrate the user's service.

The policy may be configured according to the current state of the user or the features (for example, the service type and service duration) of the ongoing service. The configuration policy may have several types. The configuration policies are exemplified but not limited to the following:
1. According to the current state of the user, decide whether to migrate the user's service. Because S-CSCF1 knows the current state of the user, S-CSCF1 can flexibly decide, according to the user state, whether to migrate. If the user is idle, it is decided to migrate the user's service; if the user is busy, decided not to migrate the user's service.
2. According to the type of the ongoing service, decide whether to migrate the user's service. For real-time services such as the voice service, telephone or videophone, the service may not be migrated because the user is sensitive to the service delay in real-time services. For non-real-time services such as the short message service and web service, the service may be migrated because the migration does not impose an adverse impact on the user experience. For example, if the voice service is interrupted abruptly, the user experience is bad; if the transmission of the web page being browsed is interrupted, the user can refresh the web page to recover, and does not necessarily complain too much.
3. According to the duration of the user's service, decide whether to migrate the user's service, for example, the service whose duration reaches or exceeds the preset duration may be migrated, and the service whose duration does not reach the preset duration may not be migrated.

The preset configuration policy may be one of the preceding policies, or a combination thereof. If multiple configuration polices are preset, the policy may be selected according to the priority level. For example, the web service of the user may be migrated first, then the call service whose duration exceeds the preset duration is migrated, and finally, other call services are migrated. When other call services are migrated, the policy may also be selected according to the user class, for example, the service of non-VIP users is migrated first. The priorities are not limited to the preceding examples, and may be set according to specific conditions.

In the migration process of the user's service, if the user's service is affected by the migration, the migration may be quickened.

In the prior art, when the I-CSCF implements the service migration, because no user state information exists in the I-CSCF, the I-CSCF migrates the user's service from S-CSCF1 to S-CSCF2 in the pool without considering the user state or the type of the ongoing service of the user. After the user finishes registration with S-CSCF2, S-CSCF1 deletes the user data, and the ongoing service of the user is interrupted. The user cannot recover the service until the user initiates a service request on S-CSCF2 again, which affects the service experience of the user. The prior art cannot support a flexible migration according to the user state. By using the method provided herein, the service can be migrated flexibly according to the configuration policy preset by S-CSCF1, and the user experience is improved. Because S-CSCF1 knows the current state of the user, the preset policy may be: deciding, according to the current state of the user, whether to migrate the user's service. If the service is migrated only when the user is idle, the migration does not lead to interruption of the service, so that the service is migrated smoothly. If the user is using a service, the migration is performed according to the service type of the user, which improves the user experience.

Optionally, S-CSCF1 may set its state to the migrating state after receiving a service migration command.

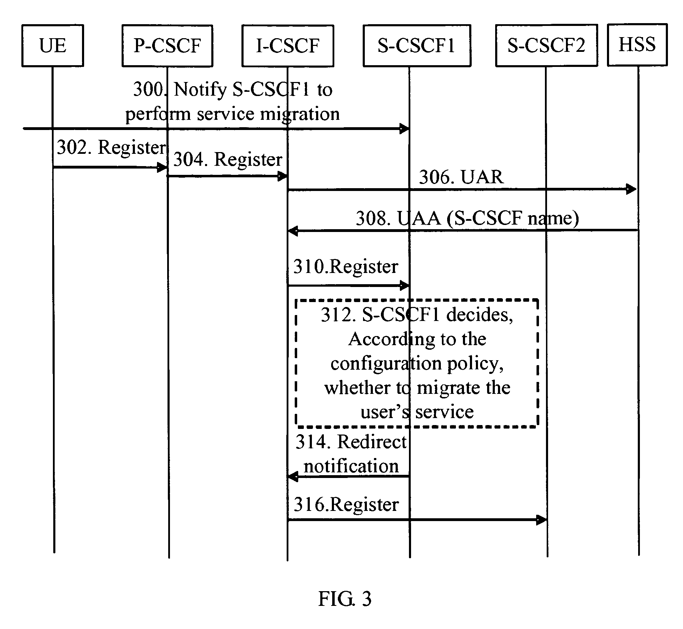

FIG. 3 is a flowchart showing another method for service migration according to an embodiment of the present invention. S-CSCF1 and S-CSCF2 are in the same S-CSCF pool.

S300. S-CSCF1 receives a service migration command.

A user's service in S-CSCF1 needs to be migrated to another S-CSCF in the resource pool, and a service migration command is sent to S-CSCF1. For example, the service migration command may be an O&M command.

S302. The UE sends a register message to the P-CSCF. The register message may be a Register message, and the UE is a terminal used by the user.

S304. The P-CSCF sends the Register message to the I-CSCF.

S306. The I-CSCF sends a User-Authorization-Request (UAR) message to the HSS.

The I-CSCF sends a UAR message to the HSS to query the S-CSCF that serves the user.

S308. The HSS returns a User-Authorization-Answer (UAA) message to the I-CSCF.

The HSS returns a UAA message to the I-CSCF, and the message indicates S-CSCF1 as the S-CSCF that serves the user.

S310. The I-CSCF sends the Register message to S-CSCF1.

S312. S-CSCF1 decides, according to the configuration policy, whether to migrate the user's service.

Because S-CSCF1 has received a service migration command, S-CSCF1 decides, according to the configuration policy after receiving a user's register message, whether to migrate the user's service.

The policy may be configured according to the current state of the user or the features of the ongoing service. The configuration policy may have several types. For details about the configuration policy, see the description about FIG. 2 above.

Optionally, S-CSCF1 may add a migration traffic control policy. The user needs to be re-registered with another S-CSCF for the purpose of migration, which imposes an adverse impact on the network. The traffic control policy enables a smooth migration. For example, according to a traffic control algorithm, the service of one in every two users or one in every four users is migrated. The algorithm is configurable.

In this embodiment, optionally, the following step includes:
S314: If S-CSCF1 decides to migrate the user's service, S-CSCF1 sends a redirect message to the I-CSCF.

If, in step S312, S-CSCF1 decides to migrate the user's service, S-CSCF1 sends a redirect message to the I-CSCF, instructing the I-CSCF to migrate the user's service to another S-CSCF (namely, the target S-CSCF).

The redirection method may be one of the following:
Method 1: The redirect message sent by S-CSCF1 to the I-CSCF carries an original register message, and information about the target S-CSCF. The I-CSCF forwards the register message to the target S-CSCF.
Method 2: The redirect message sent by S-CSCF1 to the I-CSCF carries an original register message. The I-CSCF selects, according to the load balance principle, an S-CSCF from the resource pool as a target S-CSCF, and forwards the register message to the target S-CSCF. The load balance principle may be: selecting randomly, selecting in turn, selecting the S-CSCF with the lightest load, or selecting according to configuration.
Method 3: When sending a register message to S-CSCF1, the I-CSCF buffers the register message for a period. Upon receiving a redirect message from S-CSCF1, the I-CSCF forwards the register message to the target S-CSCF. That is, in step S310, the I-CSCF may buffer the register message when sending the register message; in step S314, the redirect message sent by S-CSCF1 to the I-CSCF may carry no register message, and the register message forwarded by the I-CSCF to S-CSCF2 subsequently is the buffered register message. The target S-CSCF may be selected by the I-CSCF or S-CSCF1, and the information about the selected target S-CSCF is carried in the redirect message. The selection method is the same as that described in method 1 and method 2.

S316: The I-CSCF forwards the register message to S-CSCF2.

In the following description, it is assumed that the selected target S-CSCF is S-CSCF2, after the I-CSCF receives the redirect message from S-CSCF1.

Afterward, the user initiates registration with S-CSCF2. After receiving the register message from the user, S-CSCF2 obtains user data from the HSS according to the user ID in the register message, and updates the S-CSCF information registered by the user in the HSS.

By using the method provided herein, the service can be migrated flexibly according to the preset configuration policy, and the user experience can be improved. If the service is migrated only when the user is idle, the migration does not lead to interruption of the service, and the service is migrated smoothly. If the user is using a service, the migration is performed according to the service type of the user, which improves the user experience.

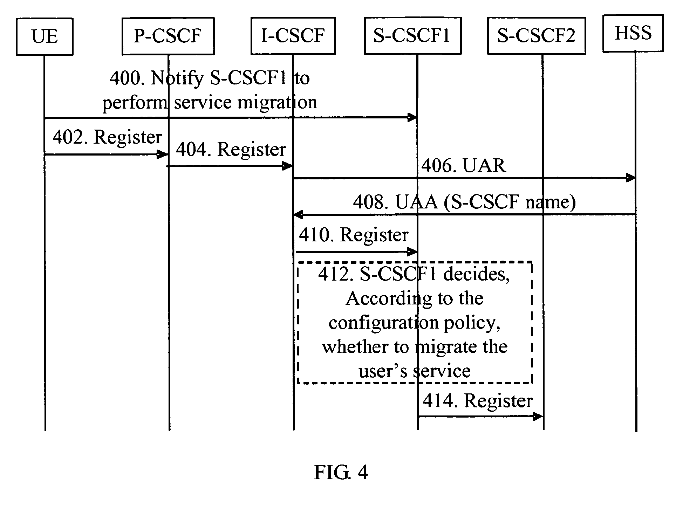

FIG. 4 is a flowchart showing another method for service migration according to an embodiment of the present invention. S-CSCF1 and S-CSCF2 are in the same S-CSCF pool.

Steps S400-S412 are the same as steps S300-S312.

In this embodiment, optionally, the following step includes:
S414: S-CSCF1 forwards the register message to S-CSCF2.

If S-CSCF1 decides to migrate the user's service, S-CSCF1 selects a target S-CSCF (for example, S-CSCF2), and forwards the register message of the user to S-CSCF2.

S-CSCF1 may select the target S-CSCF according to a load balance principle. The load balance principle may be: selecting randomly, selecting in turn, selecting the S-CSCF with the lightest load, or selecting according to configuration.

After receiving the register message of the user forwarded by S-CSCF1, S-CSCF2 performs the user registration procedure. The user registration with S-CSCF2 and the subsequent steps are covered in the prior art, and are not further described here.

By using the method provided herein, the user's service can be migrated flexibly according to the preset policy, and the user experience can be improved. If the service is migrated when the user is idle, the migration does not lead to interruption of the service, and the service is migrated smoothly. If the user is using a service, the migration is performed according to the service type of the user, which improves the user experience.

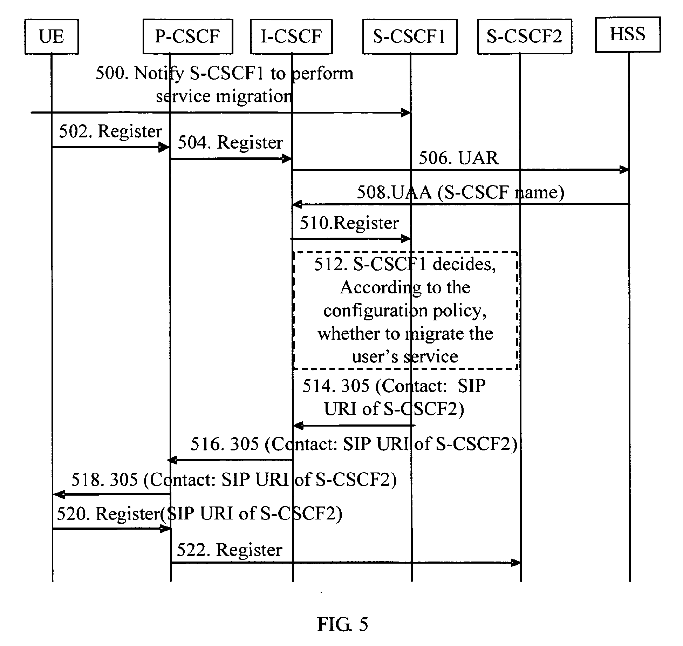

FIG. 5 is a flowchart showing another method for service migration according to an embodiment of the present invention. S-CSCF1 and S-CSCF2 are in the same S-CSCF pool.

Steps S500-S512 are the same as steps S300-S312.

This embodiment optionally includes: If S-CSCF1 decides to migrate the user's service, S-CSCF1 notifies the UE to initiate registration with the target S-CSCF. The detailed steps S514S522 are as follows:
S514: S-CSCF1 sends a message used to notify the UE to redirect (such as a 305 message) to the I-CSCF. The message carries information about the target S-CSCF2 of the redirection (namely, carries the SIP URI of S-CSCF2).
S516: The I-CSCF sends the message used to notify the UE to redirect to the P-CSCF.
S518: The P-CSCF sends the message used to notify the UE to redirect to the UE.
S520: After receiving the message used to notify the UE to redirect, the UE initiates registration with the P-CSCF by sending a register message. The register message carries information about the target S-CSCF (namely, S-CSCF2).
S522: P-CSCF initiates registration with S-CSCF2.

Afterward, the user initiates registration with S-CSCF2. After receiving the register message from the user, S-CSCF2 obtains user data from the HSS according to the user ID in the register message, and updates the S-CSCF information registered by the user in the HSS.

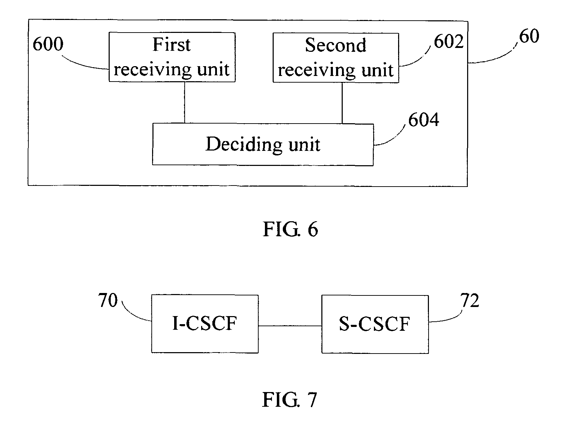

FIG. 6 is a schematic diagram showing a structure of an S-CSCF 60 according to an embodiment of the present invention. The S-CSCF 60 includes:
a first receiving unit 600, configured to receive a service migration command;
a second receiving unit 602, configured to receive a user's register message sent by an I-CSCF; and
a deciding unit 604, configured to, after the second receiving unit receives the user's register message, decide, according to a preset configuration policy, whether to migrate the user's service.

The policy may be configured according to the current state of the user or the features of the ongoing service. The configuration policy may have several types. For details about the configuration policy, see the description about FIG. 2 above.

Optionally, the S-CSCF 60 further includes a first sending unit 606, which is configured to send a redirect message that carries a register message to the I-CSCF when the deciding unit 604 decides to migrate the user's service.

After receiving the redirect message, the I-CSCF selects the target S-CSCF, and sends the register message to the selected target S-CSCF. The S-CSCF 60 and the target S-CSCF are in the same S-CSCF pool. For methods in which the I-CSCF selects the target S-CSCF, see the preceding description in the method embodiment.

Optionally, the S-CSCF 60 further includes a first selecting unit 608 and a second sending unit 610. The first selecting unit 608 is configured to select a target S-CSCF when the deciding unit 604 decides to migrate the user's service. The second sending unit 610 is configured to send a register message to the target S-CSCF selected by the first selecting unit 608.

The S-CSCF and the target S-CSCF are in the same S-CSCF pool. For methods in which the selecting unit 608 selects the target S-CSCF, see the preceding description in the method embodiment.

Optionally, the S-CSCF further includes a second selecting unit 612 and a triggering unit 614. The second selecting unit 612 is configured to select a target S-CSCF when the deciding unit 604 decides to migrate the user's service. The triggering unit 614 is configured to instruct the UE to initiate registration with the target S-CSCF when the second selecting unit 612 selects the target S-CSCF.

FIG. 7 is a schematic diagram showing a structure of a system for service migration according to an embodiment of the present invention. The system includes:
an I-CSCF 70, configured to send a user's register message to an S-CSCF 72; and
an S-CSCF 72, configured to: receive a service migration command; and after receiving the register message sent by the I-CSCF 70, decide, according to a preset configuration policy, whether to migrate a user's service.

Optionally, the S-CSCF 72 is further configured to send a redirect message that carries the register message to the I-CSCF 70 after deciding to migrate the user's service. The I-CSCF 70 is further configured to select a target S-CSCF, and send the register message to a selected target S-CSCF 74. The S-CSCF 72 and the target S-CSCF are in the same S-CSCF pool.

For methods in which the I-CSCF 70 selects the target S-CSCF, see the preceding description in the method embodiment.

Optionally, the S-CSCF 72 is further configured to select a target S-CSCF after deciding to migrate the user's service; furthermore, the S-CSCF 72 is further configured to send the register message to the selected target S-CSCF; the target S-CSCF and S-CSCF 72 are in the same S-CSCF pool.

Optionally, the S-CSCF 72 is further configured to select a target S-CSCF after deciding the user's service is migrated; furthermore, the S-CSCF 72 is further configured to instruct the UE to initiate registration with the target S-CSCF after selecting the target S-CSCF; the target S-CSCF and S-CSCF 72 are in the same S-CSCF pool.

After reading the foregoing embodiments, persons skilled in the art are clearly aware that the embodiments of the present invention may be implemented through hardware, or through software in addition to a necessary universal hardware platform. Therefore, all or part of the contributions of the technical solution under the present invention may be embodied in a software product. The software product may be stored in a storage medium such as a Read Only Memory (ROM) or a Random Access Memory (RAM), a magnetic disk, or a Compact Disk-Read Only Memory (CD-ROM), and may include several instructions that enable a computer device (for example, a personal computer, a server, or a network device) to execute the method provided in any embodiment or in a part of the embodiment of the present invention.

The preceding descriptions are merely exemplary embodiments of the present invention, and not intended to limit the scope of the present invention. Any modifications, variations or replacement that can be easily derived by those skilled in the art shall fall within the protection scope of the present invention. Therefore, the protection scope of the present invention is subject to the appended claims.

## Claims

1. A service migration method, comprising:
receiving (S200; S300; S400; S500), by a first Serving-Call Session Control Function ,S-CSCF, a service migration command; and
receiving (S202; S310, S312; S410, S412; S510, S512), by the first S-CSCF, a user's register message sent by an Interrogating-Call Session Control Function, I-CSCF, and deciding, according to a preset configuration policy, whether to migrate the user's service.

2. The method according to claim 1, wherein the step of deciding, according to the preset configuration policy, whether to migrate the user's service includes at least one of the following:
deciding, according to a current state of the user, whether to migrate the user's service, and deciding to migrate the user's service if the user is idle, or deciding not to migrate the user's service if the user is busy;
deciding, according to a service type of the user, whether to migrate the user's service, and deciding to migrate the user's service if the user's service is not real-time, or deciding not to migrate the user's service if the user's service is real-time; and
deciding, according to a duration of the user's service, whether to migrate the user's service, and deciding to migrate the user's service if the duration of the service reaches or exceeds a preset duration, or deciding not to migrate the user's service if the duration of the service is less than a preset duration.

3. The method according to claim 1 or 2, further comprising:
sending (S314), by the first S-CSCF, a redirect message that carries the register message to the I-CSCF after deciding to migrate the user's service;
deciding, by the I-CSCF, to migrate the user's service to a second S-CSCF after receiving the redirect message; and
sending (S316), by the I-CSCF, the register message to the second S-CSCF, wherein the first S-CSCF and the second S-CSCF are in a same S-CSCF pool.

4. The method according to claim 3, further comprising:
obtaining (S314), by the I-CSCF, a second S-CSCF from information carried in the redirect message; or
selecting, by the I-CSCF, a second S-CSCF according to a load balance principle.

5. The method according to claim 1 or 2, further comprising:
sending, by the first S-CSCF, the register message to a second S-CSCF or instructing a User Equipment, UE, to initiate registration with the second S-CSCF if the first S-CSCF decides to migrate the user's service, wherein the first S-CSCF and the second S-CSCF are in the same S-CSCF pool.

6. A Serving-Call Session Control Function, S-CSCF, comprising:
a first receiving unit (600), configured to receive a service migration command;
a second receiving unit (602), configured to receive a user's register message sent by an Interrogating-Call Session Control Function, I-CSCF; and
a deciding unit (604), configured to, after the second receiving unit receives the user's register message, decide, according to a preset configuration policy, whether to migrate the user's service.

7. The S-CSCF according to claim 6, further comprising:
a first sending unit (606), configured to send a redirect message that carries the register message to the I-CSCF after the deciding unit decides to migrate the user's service, wherein the I-CSCF selects a target S-CSCF after receiving the redirect message.

8. The S-CSCF according to claim 6, further comprising:
a first selecting unit (608), configured to select a target S-CSCF if the deciding unit decides to migrate the user's service; and
a second sending unit (610), configured to send the register message to the target S-CSCF, wherein the target S-CSCF and the S-CSCF are in the same S-CSCF pool.

9. The S-CSCF according to claim 6, further comprising:
a second selecting unit (612), configured to select a target S-CSCF if the deciding unit decides to migrate the user's service; and
a triggering unit (614), configured to instruct a User Equipment, UE, to initiate registration with the target S-CSCF after the second selecting unit selects the target S-CSCF, wherein the target S-CSCF and the S-CSCF are in the same S-CSCF pool.

10. A service migration system, comprising:
an Interrogating-Call Session Control Function, I-CSCF, configured to send a user's register message to a Serving-Call Session Control Function, S-CSCF; and
the S-CSCF, configured to: receive a service migration command; and after receiving the register message sent by the I-CSCF, decide, according to a preset configuration policy, whether to migrate the user's service.

11. The system according to claim 10, wherein:
the S-CSCF is the S-CSCF specified in any one of claims 6-9.

## Patentansprüche

1. Dienstmigrationsverfahren, das Folgendes umfasst:
Empfangen (S200; S300; S400; S500) durch eine erste dienende Anrufsitzungs-Steuerfunktion, S-CSCF, eines Dienstmigrationsbefehls; und
Empfangen (S202; S310, S312; S410, S412; S510, S512) durch die erste S-CSCF einer durch eine Abfrage-Anrufsitzungs-Steuerfunktion, I-CSCF, gesendeten Registrierungsnachricht eines Anwenders und Entscheiden in Übereinstimmung mit einer vorgegebenen Konfigurationsstrategie, ob der Dienst des Anwenders zu migrieren ist.

2. Verfahren nach Anspruch 1, wobei der Schritt des Entscheidens in Übereinstimmung mit der vorgegebenen Konfigurationsstrategie, ob der Dienst des Anwenders zu migrieren ist, Folgendes enthält:
Entscheiden in Übereinstimmung mit einem momentanen Zustand des Anwenders, ob der Dienst des Anwenders zu migrieren ist, und Entscheiden, den Dienst des Anwenders zu migrieren, falls der Anwender inaktiv ist, oder Entscheiden, den Dienst des Anwenders nicht zu migrieren, falls der Anwender beschäftigt ist;
Entscheiden in Übereinstimmung mit einem Diensttyp des Anwenders, ob der Dienst des Anwenders zu migrieren ist, und Entscheiden, den Dienst des Anwenders zu migrieren, falls der Dienst des Anwenders nicht in Echtzeit ist, oder Entscheiden, den Dienst des Anwenders nicht zu migrieren, falls der Dienst des Anwenders in Echtzeit ist; und/oder
Entscheiden in Übereinstimmung mit einer Dauer des Dienstes des Anwenders, ob der Dienst des Anwenders zu migrieren ist, und Entscheiden, den Dienst des Anwenders zu migrieren, falls die Dauer des Dienstes eine vorgegebene Dauer erreicht oder übersteigt, oder Entscheiden, den Dienst des Anwenders nicht zu migrieren, falls die Dauer des Dienstes kleiner als eine vorgegebene Dauer ist.

3. Verfahren nach Anspruch 1 oder 2, das ferner Folgendes umfasst:
Senden (S314) durch die erste S-CSCF einer Umleitungsnachricht, die die Registrierungsnachricht führt, nach dem Entscheiden, den Dienst des Anwenders zu migrieren, an die I-CSCF;
Entscheiden durch die I-CSCF nach dem Empfangen der Umleitungsnachricht, den Dienst des Anwenders zu einer zweiten S-CSCF zu migrieren; und
Senden (S316) durch die I-CSCF der Registrierungsnachricht an die zweite S-CSCF, wobei sich die erste S-CSCF und die zweite S-CSCF im selben S-CSCF-Pool befinden.

4. Verfahren nach Anspruch 3, das ferner Folgendes umfasst:
Erhalten (S314) durch die I-CSCF einer zweiten S-CSCF aus den in der Umleitungsnachricht geführten Informationen; und
Auswählen durch die I-CSCF einer zweiten S-CSCF in Übereinstimmung mit einem Lastausgleichsprinzip.

5. Verfahren nach Anspruch 1 oder 2, das ferner Folgendes umfasst:
Senden durch die erste S-CSCF der Registrierungsnachricht an eine zweite S-CSCF oder Anweisen eines Anwendergeräts, UE, die Registrierung bei der zweiten S-CSCF einzuleiten, falls die erste S-CSCF entscheidet, den Dienst des Anwenders zu migrieren, wobei sich die erste S-CSCF und die zweite S-CSCF im selben S-CSCF-Pool befinden.

6. Dienende Anrufsitzungs-Steuerfunktion, S-CSCF, die Folgendes umfasst:
eine erste Empfangseinheit (600), die konfiguriert ist, einen Dienstmigrationsbefehl zu empfangen;
eine zweite Empfangseinheit (602), die konfiguriert ist, eine durch eine Abfrage-Anrufsitzungs-Steuerfunktion, I-CSCF, gesendete Registrierungsnachricht des Anwenders zu empfangen; und
eine Entscheidungseinheit (604), die konfiguriert ist, in Übereinstimmung mit einer vorgegebenen Konfigurationsstrategie zu entscheiden, ob der Dienst des Anwenders zu migrieren ist, nachdem die zweite Empfangseinheit die Registrierungsnachricht des Anwenders empfangen hat.

7. S-CSCF nach Anspruch 6, die ferner Folgendes umfasst:
eine erste Sendeeinheit (606), die konfiguriert ist, eine Umleitungsnachricht, die die Registrierungsnachricht führt, an die I-CSCF zu senden, nachdem die Entscheidungseinheit entschieden hat, den Dienst des Anwenders zu migrieren, wobei die I-CSCF nach dem Empfangen der Umleitungsnachricht eine Ziel-S-CSCF auswählt.

8. S-CSCF nach Anspruch 6, die ferner Folgendes umfasst:
eine erste Auswahleinheit (608), die konfiguriert ist, eine Ziel-S-CSCF auszuwählen, falls die Entscheidungseinheit entscheidet, den Dienst des Anwenders zu migrieren; und
eine zweite Sendeeinheit (610), die konfiguriert ist, die Registrierungsnachricht an die Ziel-S-CSCF zu senden, wobei sich die Ziel-S-CSCF und die S-CSCF im selben S-CSCF-Pool befinden.

9. S-CSCF nach Anspruch 6, die ferner Folgendes umfasst:
eine zweite Auswahleinheit (612), die konfiguriert ist, eine Ziel-S-CSCF auszuwählen, falls die Entscheidungseinheit entscheidet, den Dienst des Anwenders zu migrieren; und
eine Auslöseeinheit (614), die konfiguriert ist, ein Anwendergerät, UE, anzuweisen, die Registrierung bei der Ziel-S-CSCF einzuleiten, nachdem die zweite Auswahleinheit die Ziel-S-CSCF ausgewählt hat, wobei sich die Ziel-S-CSCF und die S-CSCF im selben S-CSCF-Pool befinden.

10. Dienstmigrationssystem, das Folgendes umfasst:
eine Abfrage-Anrufsitzungs-Steuerfunktion, I-CSCF, die konfiguriert ist, eine Registrierungsnachricht des Anwenders an eine dienende Anrufsitzungs-Steuerfunktion, S-CSCF, zu senden; und
die S-CSCF, die konfiguriert ist: einen Dienstmigrationsbefehl zu empfangen; und nach dem Empfangen der durch die I-CSCF gesendeten Registrierungsnachricht in Übereinstimmung mit einer vorgegebenen Konfigurationsstrategie zu entscheiden, ob der Dienst des Anwenders zu migrieren ist.

11. System nach Anspruch 10, wobei
die S-CSCF die S-CSCF ist, die in einem der Ansprüche 6-9 spezifiziert ist.

## Revendications

1. Procédé de migration de services, comprenant :
la réception (S200 ; S300 ; S400 ; S500), par une première Fonction de Commande de Session d'Appel de Desserte, S-CSCF, d'une commande de migration de service ; et
la réception (S202 ; 5310, S312 ; S410, S412 ; S510, S512), par la première S-CSCF, d'un message d'enregistrement d'utilisateur envoyé par une Fonction de Commande de Session d'Appel Interrogatrice, I-CSCF, et la décision, en fonction d'une règle de configuration préétablie, qu'il convient ou non de migrer le service de l'utilisateur.

2. Procédé selon la revendication 1, dans lequel l'étape de décision, en fonction d'une règle de configuration préétablie, qu'il convient ou non de migrer le service de l'utilisateur comporte au moins l'une des étapes suivantes :
la décision, en fonction d'un état courant de l'utilisateur, qu'il convient ou non de migrer le service de l'utilisateur, et la décision de migrer le service de l'utilisateur si l'utilisateur est inactif, ou la décision de ne pas migrer le service de l'utilisateur si l'utilisateur est occupé ;
la décision, en fonction d'un type de service de l'utilisateur, qu'il convient ou non de migrer le service de l'utilisateur, et la décision de migrer le service de l'utilisateur si le service de l'utilisateur n'est pas en temps réel, ou la décision de ne pas migrer le service de l'utilisateur si le service de l'utilisateur est en temps réel ; et
la décision, en fonction d'une durée du service de l'utilisateur, qu'il convient ou non de migrer le service de l'utilisateur, et la décision de migrer le service de l'utilisateur si la durée du service atteint ou dépasse une durée préétablie, ou la décision de ne pas migrer le service de l'utilisateur si la durée du service est inférieure à une durée préétablie.

3. Procédé selon la revendication 1 ou 2, comprenant en outre :
l'envoi (S314), par la première S-CSCF, d'un message de redirection qui inclut le message d'enregistrement à l'I-CSCF après la décision de migrer le service de l'utilisateur ;
la décision, par l'I-CSCF, de migrer le service de l'utilisateur vers une seconde S-CSCF après la réception du message de redirection ; et
l'envoi (S316), par l'I-CSCF, du message d'enregistrement à la seconde S-CSCF, la première S-CSCF et la seconde S-CSCF se trouvant dans une même réserve de S-CSCF.

4. Procédé selon la revendication 3, comprenant en outre :
l'obtention (S314), par l'I-CSCF, d'une seconde S-CSCF à partir d'informations incluses dans le message de redirection ; ou
la sélection, par l'I-CSCF, d'une seconde S-CSCF en fonction d'un principe d'équilibre de charge.

5. Procédé selon la revendication 1 ou 2, comprenant en outre :
l'envoi, par la première S-CSCF, du message d'enregistrement à une seconde S-CSCF ou la commande à un Equipement Utilisateur, UE, de lancer l'enregistrement avec la seconde S-CSCF si la première S-CSCF décide de migrer le service de l'utilisateur, la première S-CSCF et la seconde S-CSCF se trouvant dans une même réserve de S-CSCF.

6. Fonction de Commande de Session d'Appel de Desserte, S-CSCF, comprenant :
une première unité de réception (600), configurée pour recevoir une commande de migration de service ;
une seconde unité de réception (602), configurée pour recevoir un message d'enregistrement d'utilisateur envoyé par une Fonction de Commande de Session d'Appel Interrogatrice, I-CSCF ; et
une unité de décision (604), configurée pour, après que la seconde unité de réception reçoit le message d'enregistrement de l'utilisateur, en fonction d'une règle de configuration préétablie, décider qu'il convient ou non de migrer le service de l'utilisateur.

7. S-CSCF selon la revendication 6, comprenant en outre :
une première unité d'envoi (606), configurée pour envoyer un message de redirection qui inclut le message d'enregistrement à l'I-CSCF après que l'unité de décision décide de migrer le service de l'utilisateur, l'I-CSCF sélectionnant une S-CSCF cible après la réception du message de redirection.

8. S-CSCF selon la revendication 6, comprenant en outre :
une première unité de sélection (608), configurée pour sélectionner une S-CSCF cible si l'unité de décision décide de migrer le service de l'utilisateur ; et
une seconde unité d'envoi (610), configurée pour envoyer le message d'enregistrement à la S-CSCF cible, dans lequel la S-CSCF cible et la S-CSCF se trouvent dans la même réserve de S-CSCF.

9. S-CSCF selon la revendication 6, comprenant en outre :
une seconde unité de sélection (612), configurée pour sélectionner une S-CSCF cible si l'unité de décision décide de migrer le service de l'utilisateur ; et
une unité de déclenchement (614), configurée pour ordonner à un Equipement Utilisateur, UE, de lancer l'enregistrement avec la S-CSCF cible après que la seconde unité de sélection sélectionne la S-CSCF cible, la S-CSCF cible et la S-CSCF se trouvant dans la même réserve de S-CSCF.

10. Système de migration de service, comprenant :
une Fonction de Commande de Session d'Appel Interrogatrice, I-CSCF, configurée pour envoyer un message d'enregistrement d'utilisateur à une Fonction de Commande de Session d'Appel de Desserte, S-CSCF ; et
la S-CSCF, configurée pour : recevoir une commande de migration de service ; et après réception du message d'enregistrement envoyé par l'I-CSCF, en fonction d'une règle de configuration préétablie, décider qu'il convient ou non de migrer le service de l'utilisateur.

11. Système selon la revendication 10, dans lequel :
la S-CSCF est la S-CSCF spécifiée dans l'une quelconque des revendications 6 à 9.
